# EUROPÄISCHE PATENTSCHRIFT

(11) **EP 1 621 133 B1**
(45) Veröffentlichungstag und Bekanntmachung des Hinweises auf die Patenterteilung: **22.08.2007**
(21) Anmeldenummer: 04018173.7
(22) Anmeldetag: 30.07.2004
(51) Int. Cl.: A61B 6/00, G06T 3/00

(54) **Optimierung der Bildsignal-Interpretation für analoge Bildsignale von medizinischen Bildaufnahmevorrichtungen, insbesondere Röntgengeräten**
Optimisation of the interpretation of analog image signals from medical image recording apparatuses, in particular x-ray devices
Optimisation de l'interprétation de signaux analogues d'images provenant d'appareils médicaux d'enregistrement d'images, en particulier d'appareils à rayons X

(43) Veröffentlichungstag der Anmeldung: 01.02.2006
(73) Patentinhaber: BrainLAB AG, 85551 Kirchheim/Heimstetten (DE)
(72) Erfinder: Kraus, Florian, 85540 Haar (DE); Maier, Christian, 81627 München (DE); Weiser, Manfred, 81673 München (DE)
(74) Vertreter: Schwabe - Sandmair - Marx

(56) Entgegenhaltungen:
- EP-A- 1 260 179
- US-A- 5 214 716
- US-A- 5 642 239
- US-A1- 2002 183 619
- US-A1- 2004 101 180

## Beschreibung

Die Erfindung betrifft ein Verfahren zur Optimierung der Interpretation analoger Bildsignale oder Bildsignalfolgen, die von medizinischen Bildaufnahmevorrichtungen, insbesondere Röntgengeräten ausgegeben werden.

Auf dem Gebiet der röntgenbildunterstützten, bildgeführten Chirurgie, wo ein Arzt mit Hilfe eines Navigationssystems arbeitet, das ihm Informationen über die innere Körperstruktur des Patienten mit Hilfe von intraoperativ erstellten Röntgenbildern zur Verfügung stellt, ist es wichtig, präzise denjenigen Moment zu identifizieren, an dem durch das Röntgengerät ein neues Bild aufgenommen wird. Das Navigationssystem muss "wissen", zu welchem Zeitpunkt das Röntgengerät ein bestimmtes neues Röntgenbild aufgenommen hat, um diese Bildinformationen positionsrichtig derjenigen Lage des Patienten zuordnen zu können, die im Navigationssystem zu diesem Zeitpunkt für den Patienten erfasst wird.

Herkömmlicherweise ist man bei der Verwendung analoger Röntgengeräte bzw. C-Bogen-Röntgengeräte darauf angewiesen, mit Hilfe bestimmter Hardwarekomponenten den Zeitpunkt der Bilderstellung zu erfassen. Beispielsweise wird dabei ein Röntgendetektor auf dem Bildverstärker eines C-Bogen-Röntgengeräts angebracht. Wann immer ein Bild akquiriert wird, wird der Detektor einer Röntgenstrahlung ausgesetzt, und der entsprechende Zeitpunkt kann erfasst werden. Bei anderen herkömmlichen Systemen wurde ein Lichtdetektor auf der Kontrolllampe des C-Arms angebracht, welche aktiviert wird, wenn ein Bild akquiriert wird. Beide Verfahren sind hardwareunterstützte Methoden, welche es erfordern, zusätzliche Detektoren an dem Röntgengerät anzubringen. Dies erhöht die Fehleranfälligkeit sowie den Kapitalkostenaufwand.

Aus der US 2004/101180 A1 ist ein Verfahren zur Optimierung der Interpretation analoger Bildsignale oder Bildsignalfolgen nach dem Oberbegriff des Anspruchs 1 bekannt.

Aus der US-A-5214716 sind eine Vorrichtung und ein Verfahren zur Erfassung von mehrdimensionalen Bildfolgen bekannt, insbesondere von Bildsignalen. Das Verfahren nutzt die Korrelation von Vektoren, die das Signal repräsentieren und einen Maskenvektor, der aus den Vektoren, die die zu erkennende Bildfolge repräsentieren, bestimmt wird. Es wird eine Serie von Werten entsprechend dem Grad der Ähnlichkeit der beiden korrelierenden Vektoren erzeugt und einem zweiten Kreis zur Korrelation der Sequenz der Serie von Werten mit einer Referenzsequenz aus den Vektoren der zu erkennenden Sequenz zugeordnet. Die Werte, die dem Grad der Ähnlichkeit der beiden zu korrelierenden Bildfolgen entsprechen, werden mit einem Grenzwert verglichen und so eine Entscheidung über die Richtigkeit der Erkennung getroffen.

Es ist die Aufgabe der vorliegenden Erfindung, ein Verfahren zur Optimierung der Interpretation analoger Bildsignale oder Bildsignalfolgen, die von medizinischen Bildaufnahmevorrichtungen, insbesondere Röntgengeräten ausgegeben werden, zu schaffen, welches die oben genannten Nachteile überwindet. Insbesondere soll der Moment, an dem ein neues Bildsignal vorliegt, ohne zusätzliche Hardwareausstattung erfassbar sein. Noch spezieller sollen Art und Eigenschaften neuer Bilder interpcetationsfähig gemacht werden.

Diese Aufgabe wird erfindungsgemäß durch ein Verfahren gemäß dem Patentanspruch 1 gelöst. Die Unteransprüche definieren bevorzugte Ausführungsformen der Erfindung.

Die erfindungsgemäß erzielbaren Vorteile beruhen auf der Durchführung eines Verfahrens zur Optimierung der Interpretation analoger Bildsignale oder Bildsignalfolgen, die von medizinischen Bildaufnahmevorrichtungen, insbesondere Röntgengeräten ausgegeben werden, bei dem
a) die Korrelation aufeinanderfolgend aufgenommener Bildsignale geprüft wird;
b) festgestellt wird, dass die Bildsignale dasselbe Bild abbilden, wenn die Korrelation nicht geringer als ein bestimmter Schwellwert wird;
c) festgestellt wird, dass die Bildsignale möglicherweise unterschiedliche Bilder abbilden, wenn die Korrelation geringer als ein bestimmter Schwellwert wird; und bei dem
d) der Schwellwert dynamisch, insbesondere in Abhängigkeit vom aktuellen Signal/Rauschen-Verhältnis, neu eingestellt wird, wenn sich die Korrelation geändert hat.

Mit anderen Worten geht die vorliegende Erfindung davon ab, die Erstellung eines neuen Bildes per Hardware zeitmäßig zu detektieren, sondern es wird das Bildsignal interpretiert, und aus dem Inhalt des Bildsignals oder der Bildsignalfolge wird geschlossen, ob ein neues Bild erstellt worden ist. Dies ergibt natürlich einerseits den Vorteil, dass man sich den Hardware-Aufwand sparen kann, andererseits besteht, wenn nach dem erfindungsgemäßen Konzept gearbeitet wird, immer die Möglichkeit, die erfassten Bildsignale zu interpretieren und auch noch zusätzliche Informationen aus ihnen zu gewinnen.

Einen besonderen Vorteil bietet die dynamische Anpassung bzw. Neueinstellung des Schwellwertes. Würde der Schwellwert nämlich nicht angepasst, könnte es zu Fällen kommen, wo ein neues Bild, das sich nach der Aufnahme über eine gewisse Zeit nicht ändert, aufgrund eines erhöhten Rausch-Anteils ständig unterhalb des Schwellwertes liegt, was die Korrelation betrifft. Ein System ohne die Anpassung des Schwellwertes würde dann laufend ausgeben, dass neue Bilder detektiert werden; mit der Anpassung des Schwellwerts wird diese Fehlerquelle behoben.

Bei einer bevorzugten Ausführungsform des erfindungsgemäßen Verfahrens wird der Schwellwert mit steigendem Signal/Rauschverhältnis höher und mit sinkendem Signal/Rauschverhältnis niedriger eingestellt. Dabei, oder auch ganz allgemein, kann der Schwellwert so eingestellt werden, dass der Korrelationsabstand zwischen Bildsignal und Schwellwert konstant gehalten wird.

Wie oben schon angesprochen gestattet die laufende Analyse des Bildinhalts noch mehr als die bloße Feststellung, ob ein neues Bild am Bildempfänger eines analogen Röntgengerätes anliegt. Es läßt sich nämlich aus der Analyse einer bestimmten Anzahl erhaltener und aufeinander folgender Bildsignale erkennen, ob nicht lediglich bestimmte Aufnahmeparameter geändert worden sind oder gerade das Ende einer Langzeit- oder Dauer-Röntgenaufnahme erreicht worden ist.

Auf dieser Erkenntnis beruhend stellt die vorliegende Erfindung ein Verfahren bereit, bei dem im Falle der Feststellung, dass unterschiedliche Bilder abgebildet werden, eine bestimmt Anzahl von aufeinander folgenden Bildsignalen unterhalb des Schwellwerts ausgewertet werden, die Standardabweichung dieser Signale bestimmt und mit einem Vorgabewert verglichen wird, worauf:
c1a) wenn die Anzahl geänderter Bildsignale in Folge mindestens gleich einer vorbestimmten Sampleanzahl ist und die Standardabweichung niedriger ist als der Vorgabewert, festgestellt wird, dass die Korrelationsabweichung durch Änderungen in der Aufzeichnungsweise desselben Bildes verursacht wurde, insbesondere durch Kontrast- oder Helligkeitsänderungen, und
c1b) der Schwellwert neu und niedriger eingestellt wird;
   oder
c2a) wenn die Anzahl geänderter Bildsignale in Folge mindestens gleich einer vorbestimmten Sampleanzahl ist und die Standardabweichung höher ist als der Vorgabewert, festgestellt wird, dass die Korrelationsabweichung durch eine kontinuierliche Bilderfassung aus unterschiedlichen und sich ändernden Aufzeichnungssituationen verursacht wurde, insbesondere durch fortdauernde Aufzeichnung bei einer Relativbewegung zwischen dem Aufzeichnungsgerät und dem aufgezeichneten Objekt,
c2b) der Schwellwert nicht neu eingestellt wird;
   oder
c3) wenn die Anzahl geänderter Bildsignale in Folge geringer ist als eine vorbestimmte Sampleanzahl, ein Bildsignal aus den aufeinanderfolgenden Bildsignalen als neues Bild klassifiziert wird;

Es lassen sich demnach alle möglichen Situationen erfindungsgemäß aus den akquirierten Bildsignalen heraus detektieren bzw. interpretieren, und die Navigation kann dann ausgehend von der richtigen Bildinterpretation stattfinden und auf einer solchen basieren.

Bei einer Ausführungsform des erfindungsgemäßen Verfahrens wird dann, wenn Bildsignale als neues Bild klassifiziert werden, der Zeitpunkt der Entstehung des neuen Bildes erfasst. Dieser Zeitpunkt kann einem weiterverarbeitenden System übermittelt werden, insbesondere einem medizinischen Navigationssystem, das die Bildinformationen verarbeitet, aktuellen Patientenlagedaten zuordnet und zur bildunterstützten medizinischen Behandlung ausgibt.

Gemäß einer vorteilhaften Ausführungsvariante des erfindungsgemäßen Verfahrens wird ein Zusatzschwellwert bestimmt, der zwischen dem Korrelationswert des Signals und dem Schwellwert liegt, und bei dem Bildsignale, die zwischen dem Schwellwert und dem Zusatzschwellwert liegen, als Ausreißer klassifiziert und nicht bei der dynamischen Einstellung des Schwellwerts berücksichtigt werden.

Die Erfindung betrifft ferner ein Programm, das, wenn es auf einem Computer läuft oder in einen Computer geladen ist, den Computer veranlasst, ein Verfahren durchzuführen, wie es oben beschrieben wurde. Ferner betrifft sie ein Computerprogramm-Speichermedium, das ein Programm aufweist, wie es oben definiert wurde.

Weitere medizinische Bildaufnahmevorrichtungen für die und mit denen das Verfahren gemäß der Erfindung verwendet werden kann, sind zum Beispiel Computer- oder Kernspintomographen oder andere Geräte für die medizinisch verwertbare Bildgebung.

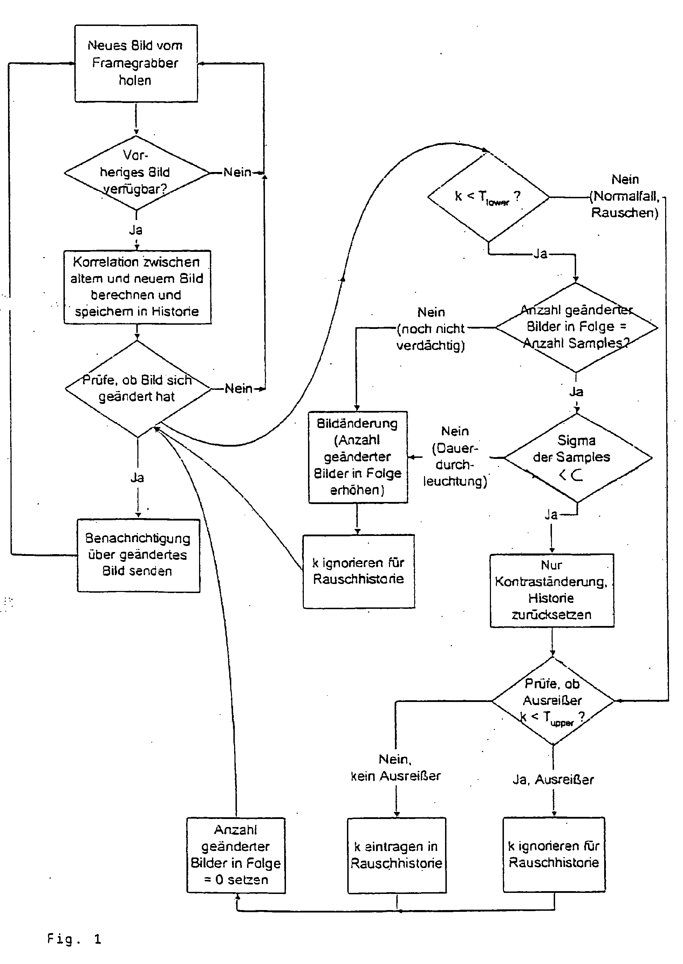

Die Erfindung wird nun anhand einer Ausführungsform erläutert. Die hierin beschriebenen Merkmale der Erfindung können einzeln oder in jedweder Kombination umgesetzt werden. Bei der Erläuterung wird auf die einzige beiliegende Figur 1 Bezug genommen, die ein Ablaufdiagramm für eine erfindungsgemäße Verfahrensvariante zeigt.

Ganz allgemein könnte man die Erfindung als ein Verfahren klassifizieren, mit dem der Auto-Korrelationswert des Video-Ausgangssignals eines C-Bogen-Röntgengeräts ausgewertet wird. Der Auto-Korrelationswert oder die Korrelation wird durch den Vergleich abfolgender Frames des Videosignals errechnet. Der Wertebereich für den Korrelationswert geht beispielsweise von 1,0 (perfekte Korrelation, keine Änderungen zwischen abfolgenden Frames) bis - 1,0 (keine Korrelation zwischen abfolgenden Frames). Aufgrund des Signalrauschens wird die Korrelation fast immer bei einem bestimmten Wert unterhalb von 1,0 liegen, der im weiteren als n bezeichnet werden soll.

Wenn ein einzelnes neues Bild akquiriert wird, fällt der Korrelationswert von n auf einen kleineren Wert, der im weiteren als s bezeichnet wird, und geht dann wieder hoch, beispielsweise wieder auf n. Um eine solche Einzelbildakquirierung zu detektieren, wird ein Schwellwert gesetzt, der im weiteren als T_{lower} bezeichnet wird. Dieser Schwellwert liegt zwischen n und s. Wenn der Korrelationswert die Schwelle T_{lower} unterschreitet, wird ein neues Bild detektiert. Zusätzlich wird der Abstand zwischen n und T_{lower} konstant gehalten.

Dies ermöglicht eine dynamische Einstellung und Anpassung des Schwellwertes T_{lower}, um Langzeit-Veränderungen im Rauschniveau zu berücksichtigen, welche aufgrund von Änderungen in der Videosignal-Qualität oder des Kontrastes des C-Bogen-Bildes entstehen können. Damit kann auch zwischen Kontraständerungen und einer Langzeit-Bilderfassung unterschieden werden, solange das Rauschniveau eines Bildes mit geändertem Kontrast nicht unter den Schwellwert T_{lower} fällt. Um diesen Fall zu berücksichtigen, wird die Anzahl der aufeinanderfolgenden Frames gezählt, die unterhalb des Schwellwertes T_{lower} liegen. Wenn eine bestimmte Anzahl erreicht wird, wird die Standardabweichung "Sigma" der jeweiligen Korrelationswerte errechnet und mit einem Vorgabewert oder Grenzwert c verglichen. Dieser Grenzwert oder Vorgabewert c dient dazu, zwischen einer Kontraständerung (mit geringer Standardabweichung der Korrelationswerte) und einer konstanten oder Langzeit-Bilderfassung (mit hoher Standardabweichung der Korrelationswerte) zu unterscheiden. Wenn Sigma unterhalb von c liegt, wird die Änderung des Rauschniveaus als eine Kontraständerung am Bild angenommen, und der Schwellwert T_{lower} wird an den momentanen Korrelationswert angepasst, wobei der Abstand zwischen dem Bildsignal und einer Korrelation von 1,0 (perfekte Korrelation) mit einem konstanten Faktor, der größer ist als 1 multipliziert wird und dieser dann als angepasster Abstand des neuen Schwellwerts verwendet wird. Wenn Sigma größer ist als c wird die Änderung im Rauschniveau als Folge einer Langzeit-Aufnahme angenommen und der Schwellwert T_{lower} wird nicht angepasst.

Ferner kann noch ein zweiter Schwellwert Tᵤₚₚₑᵣ eingeführt werden, der zwischen T_{lower} und n liegt. Dieser Schwellwert Tᵤₚₚₑᵣ dient dazu, Ausreißer in den Korrelationswerten, die durch momentane Störungen im Videosignal erzeugt werden, von tatsächlichen Bilderfassungssignalen zu unterscheiden. Alle Werte zwischen T_{lower} und Tᵤₚₚₑᵣ werden als Ausreißer qualifiziert und nicht bei der dynamischen Einstellung des Schwellwertes T_{lower}, berücksichtigt.

Im Folgenden wird der Ablauf nochmals genauer anhand des beiliegenden Ablaufdiagramms der Figur 1 erläutert. In diesem Diagramm werden die folgenden Abkürzungen verwendet:
- k:: Korrelationswerte (k = 1,0 bedeutet identische Bilder)
- T_{lower}:: unterer Schwellwert, entscheidet über neues Bild
- Tᵤₚₚₑᵣ:: oberer Schwellwert, entscheidet über Ausreißer
- Sigma:: Standardabweichung abfolgender Korrelationswerte
- c:: Grenze/Vorgabewert für Sigma

Das Ablaufdiagramm stellt den Zustand während der Akquisition neuer Bilder dar. Für die Erläuterung wird links oben bei dem Schritt begonnen, wo vom Framegrabber ein neues Bild (vom Bildverstärker eines C-Bogen-Röntgengeräts) geholt wird. Nach diesem Schritt wird entschieden, ob ein vorheriges Bild verfügbar ist, wenn dies nicht der Fall ist, wird wiederum ein neues Bild vom Framegrabber geholt. Wenn ein vorheriges Bild verfügbar ist, wird die Korrelation zwischen dem alten und dem neuen Bild berechnet und in einer Historie gespeichert. Hierauf folgt die Prüfung, ob sich das Bild geändert hat. Wenn dem nicht so ist, wird wiederum ein neues Bild vom Framegrabber geholt und der bisherige Ablauf wiederholt sich.

Die Prüfung, ob sich das Bild geändert hat, ist auf der rechten Seite des Ablaufdiagramms separat dargestellt. Im ersten Schritt dieser Prüfung wird festgestellt, ob der momentane Korrelationswert k kleiner ist als der Schwellwert T_{lower}. Wenn dies nicht der Fall ist wird angenommen, dass der Normalfall mit einem gewissen Rauschniveau vorliegt und es wird weiter zu dem Prüfschritt gegangen, wo festgestellt wird, ob ein Ausreißer im Signal vorhanden ist. Diese Prüfung stellt fest ob der Korrelationswert k kleiner ist als der Schwellwert Tᵤₚₚₑᵣ. Wenn nicht, ist der Wert für k kein Ausreißer, wird in die Rauschhistorie eingetragen, die Anzahl geänderter Bilder in Folge wird auf Null gesetzt, und die Frage, ob sich das Bild geändert hat, wird mit Nein beantwortet. Wenn der Wert für k kleiner ist als Tᵤₚₚₑᵣ wird der Wert als Ausreißer qualifiziert, nicht in die Rauschhistorie eingetragen, die Anzahl geänderter Bilder in Folge wird auf Null gesetzt und die Frage, ob sich das Bild geändert hat wird mit Nein beantwortet.

Der andere Fall ist derjenige, wo im obersten Entscheidungskästchen auf der rechten Seite in Figur 1 festgestellt wird, dass der Korrelationswert kleiner als der Schwellwert T_{lower} ist. In diesem Fall folgt eine weitere Entscheidung, bei der die Anzahl geänderter Bilder in Folge mit einer vorgegebenen Samplesanzahl verglichen wird. Wenn diese vorgegebene Samplesanzahl noch nicht erreicht ist, kann man davon ausgehen, dass keine außergewöhnlichen Umstände eingetreten sind und sich einfach das Bild geändert hat. Die Anzahl geänderter Bilder in Folge wird erhöht, der Wert k für die erfasste Korrelation wird für die Rauschhistorie ignoriert, und das Verfahren kehrt zu dem Schritt zurück, bei dem überprüft wird, ob das Bild sich geändert hat, wobei diese Frage mit Ja beantwortet wird.

Wenn die Frage, ob die Samplesanzahl erreicht worden ist, mit Ja zu beantworten ist, wird die Standardabweichung Sigma der Samples bestimmt und mit einem Vorgabewert c verglichen. Ist sie geringer als c kann davon ausgegangen werden, dass es sich nicht um ein neues Bild handelt, sondern lediglich eine Änderung in der Art der Bilderfassung vorliegt, beispielsweise eine Kontraständerung. Die Historie wird zurückgesetzt, und das Verfahren geht zur Ausreißerprüfung über, die oben schon beschrieben wurde.

Wird aber festgestellt, dass die Standardabweichung größer ist als der Vorgabewert c, kann davon ausgegangen werden, dass es sich um ein Bild aus einer Anzahl von Bildern handelt, die während einer Dauerdurchleuchtung bzw. Langzeitdurchleuchtung stammen. Es wird dann festgestellt, dass das Bild sich geändert hat, die Anzahl geänderter Bilder in Folge wird erhöht, der Wert k wird für die Rauschhistorie ignoriert und der Prüfung, ob sich das Bild geändert hat wird die Antwort "Ja" weitergegeben.

In den Fällen, wo die Prüfung, ob sich das Bild geändert hat (linke Seite in Figur 1) mit ja beantwortet wird, wird durch das Verfahren eine Meldung oder Benachrichtigung erzeugt, die einem weiterverarbeitendem System übermittelt werden kann, insbesondere einem medizinischen Navigationssystem, das die Bildinformationen verarbeitet, aktuellen Patientenlagedaten zuordnet und zur bildunterstützten medizinischen Behandlung ausgibt.

Danach kehrt das Verfahren wieder zu dem Schritt zurück, in dem ein neues Bild vom Framegrabber geholt wird.

## Patentansprüche

1. Verfahren zur Optimierung der Interpretation analoger Bildsignale oder Bildsignalfolgen, die von medizinischen Bildaufnahmevorrichtungen, insbesondere Röntgengeräten ausgegeben werden, bei dem
a) die Korrelation aufeinanderfolgend aufgenommener Bildsignale geprüft wird;
b) festgestellt wird, dass die Bildsignale dasselbe Bild abbilden, wenn die Korrelation nicht geringer als ein bestimmter Schwellwert wird;
c) festgestellt wird, dass die Bildsignale möglicherweise unterschiedliche Bilder abbilden, wenn die Korrelation geringer als ein bestimmter Schwellwert wird, **dadurch gekennzeichnet, dass**
d) der Schwellwert dynamisch, insbesondere in Abhängigkeit vom aktuellen Signal/Rauschen-Verhältnis, neu eingestellt wird, wenn sich die Korrelation geändert hat, wobei
e) im Falle der Feststellung, dass möglicherweise unterschiedliche Bilder abgebildet werden, eine bestimmte Anzahl von aufeinanderfolgenden Bildsignalen unterhalb des Schwellwerts ausgewertet werden, die Standardabweichung dieser Signale bestimmt und mit einem Vorgabewert verglichen wird, worauf:
e1a) wenn die Anzahl geänderter Bildsignale in Folge mindestens gleich einer vorbestimmten Sampleanzahl ist und die Standardabweichung niedriger ist als der Vorgabewert, festgestellt wird, dass die Korrelationsabweichung durch Änderungen in der Aufzeichnungsweise desselben Bildes verursacht wurde, insbesondere durch Kontrast- oder Helligkeitsänderungen, und
e1b) der Schwellwert neu und niedriger eingestellt wird;
oder
e2a) wenn die Anzahl geänderter Bildsignale in Folge mindestens gleich einer vorbestimmten Sampleanzahl ist und die Standardabweichung höher ist als der Vorgabewert, festgestellt wird, dass die Korrelationsabweichung durch eine kontinuierliche Bilderfassung aus unterschiedlichen und sich ändernden Aufzeichnungssituationen verursacht wurde, insbesondere durch fortdauernde Aufzeichnung bei einer Relativbewegung zwischen dem Aufzeichnungsgerät und dem aufgezeichneten Objekt
e2b) der Schwellwert nicht neu eingestellt wird; oder
e3) wenn die Anzahl geänderter Bildsignale in Folge geringer ist als eine vorbestimmte Sampleanzahl, ein Bildsignal aus den aufeinanderfolgenden Bildsignalen als neues Bild klassifiziert wird.

2. Verfahren nach Anspruch 1, bei dem der Schwellwert mit steigendem Signal/Rauschverhältnis höher und mit sinkendem Signal/Rauschen-Verhältnis niedriger eingestellt wird.

3. Verfahren nach Anspruch 1 oder 2, bei dem der Schwellwert **dadurch** angepasst wird, dass der Abstand zwischen der Korrelation der aufeinander Folgend aufgenommenen Bildsignale und einer Korrelation von 1,0 die einer perfekten Korrelation entspricht, mit einem konstanten Faktor, der größer ist als 1, multipliziert wird.

4. Verfahren nach Anspruch 1, bei dem dann, wenn Bildsignale als neues Bild klassifiziert werden, der Zeitpunkt der Entstehung des neuen Bildes erfasst wird.

5. Verfahren nach Anspruch 4, bei dem der Zeitpunkt der Entstehung des neuen Bildes einem weiterverarbeitenden System übermittelt wird, insbesondere einem medizinischen Navigationssystem, das die Bildinformationen verarbeitet, aktuellen Patientenlagedaten zuordnet und zur bildunterstützten medizinischen Behandlung ausgibt.

6. Verfahren nach einem der Ansprüche 1 bis 5, bei dem ein Zusatzschwellwert bestimmt wird, der zwischen dem Korrelationswert des Signals und dem Schwellwert liegt, und bei dem Bildsignalwerte, die zwischen dem Schwellwert und dem Zusatzschwellwert liegen, als Ausreißer klassifiziert und nicht bei der dynamischen Einstellung des Schwellwerts berücksichtigt werden.

7. Programm, das, wenn es auf einem Computer läuft oder in einem Computer geladen ist, den Computer veranlasst, ein Verfahren gemäß einem der Ansprüche 1 bis 6 durchzuführen.

8. Computerprogramm-Speichermedium, das ein Programm nach Anspruch 7 aufweist.

## Claims

1. A method for optimising the interpretation of analogue image signals or sequences of image signals outputted by medical image recording devices, in particular x-ray apparatus, wherein:
a) the correlation of consecutively recorded image signals is tested;
b) it is established that the image signals depict the same image, if the correlation is not less than a particular threshold value;
c) it is established that the image signals possibly depict different images, if the correlation is less than a particular threshold value; **characterised in that**:
d) the threshold value is dynamically re-set, in particular in accordance with the current signal-to-noise ratio, if the correlation has changed; wherein:
e) when it is established that different images are possibly depicted, a certain number of consecutive image signals below the threshold value are evaluated, the standard deviation of these signals is determined and compared with a pre-set value, whereupon:
e1a) if the number of changed image signals in succession is at least equal to a predetermined sample number and the standard deviation is lower than the pre-set value, it is established that the correlation deviation has been caused by changes in the manner of recording the same image, in particular by changes in contrast or brightness; and
e1b) the threshold value is re-set lower;
or
e2a) if the number of changed image signals in succession is at least equal to a predetermined sample number and the standard deviation is higher than the pre-set value, it is established that the correlation deviation has been caused by continuously detecting images from different and changing recording situations, in particular by continuously recording during a relative movement between the recording apparatus and the recorded object;
e2b) the threshold value is not re-set; or
e3) if the number of changed image signals in succession is less than a predetermined sample number, an image signal from the consecutive image signals is classified as a new image.

2. The method according to claim 1, wherein the threshold value is set higher with an increasing signal-to-noise ratio and lower with a decreasing signal-to-noise ratio.

3. The method according to claim 1 or 2, wherein the threshold value is adapted by multiplying the gap between the correlation of the consecutively recorded image signals and a correlation of 1.0, which corresponds to a perfect correlation, by a constant factor greater than 1.

4. The method according to claim 1, wherein when image signals are classified as a new image, the time the new image was produced is detected.

5. The method according to claim 4, wherein the time the new image was produced is relayed to a further processing system, in particular a medical navigation system, which processes the image information, assigns it to current patient location data and outputs it for image-assisted medical treatment.

6. The method according to any one of claims 1 to 5, wherein an additional threshold value is determined which lies between the correlation value of the signal and the threshold value, and wherein image signal values between the threshold value and the additional threshold value are classified as outliers and are not taken into account when dynamically setting the threshold value.

7. A program which, when it is running on a computer or is loaded onto a computer, causes the computer to perform a method in accordance with any one of claims 1 to 6.

8. A computer program storage medium comprising a program according to claim 7.

## Revendications

1. Procédé d'optimisation de l'interprétation de signaux d'image ou de séries de signaux d'image analogues qui sont émis par des dispositifs médicaux de prise de vues, en particulier des appareils à rayons X, dans lequel
a) la corrélation de signaux d'image pris successivement est examinée ;
b) on établit que les signaux d'image représentent la même image, lorsque la corrélation n'est pas inférieure à une valeur seuil déterminée ;
c) on établit que les signaux d'image représentent peut-être des images différentes, lorsque la corrélation est inférieure à une valeur seuil déterminée, **caractérisé en ce que**
d) la valeur seuil est à nouveau réglée de manière dynamique, en particulier en fonction du rapport signal/bruit actuel, lorsque la corrélation a changé, sachant que
e) dans le cas où on détermine que des images peut-être différentes sont représentées, un nombre déterminé de signaux d'image successifs sont évalués en dessous de la valeur seuil, l'écart-type de ces signaux est déterminé et est comparé à une valeur de référence, moyennant quoi :
e1a) lorsque le nombre de signaux d'image modifiés est en conséquence au moins égal à un nombre échantillon prédéterminé et l'écart-type est inférieur à la valeur de référence, on établit que l'écart de corrélation a été causé par des modifications dans la manière d'enregistrement de la même image, en particulier par des modifications de luminosité ou de contraste, et
e1b) la valeur seuil est réglée à nouveau et à un niveau inférieur ; ou
e1a) lorsque le nombre de signaux d'image modifiés est en conséquence au moins égal à un nombre échantillon prédéterminé et l'écart-type est supérieur à la valeur de référence, on établit que l'écart de corrélation a été causé par un enregistrement d'image continu à partir de situations d'enregistrement différentes et changeantes, en particulier par un enregistrement permanent en cas de mouvement relatif entre l'appareil d'enregistrement et l'objet enregistré
e2b) la valeur seuil n'est pas réglée à nouveau ; ou
e3) lorsque le nombre de signaux d'image modifiés est en conséquence inférieur à un nombre échantillon prédéterminé, un signal d'image à partir des signaux d'image successifs est classifié comme nouvelle image.

2. Procédé selon la revendication 1, dans lequel la valeur seuil est établie plus élevée avec un rapport signal/bruit croissant et plus basse avec un rapport signal/bruit décroissant.

3. Procédé selon la revendication 1 ou 2, dans lequel la valeur seuil est adaptée en ce que l'écart entre la corrélation des signaux d'image captés de manière successive et une corrélation de 1,0, qui correspond à une corrélation parfaite, est multiplié par un facteur constant qui est supérieur à 1.

4. Procédé selon la revendication 1, dans lequel, lorsque des signaux d'image sont classifiés comme nouvelle image, le moment de la formation de la nouvelle image est saisi.

5. Procédé selon la revendication 4, dans lequel le moment de la formation de la nouvelle image est communiqué à un système de traitement ultérieur, en particulier à un système de navigation médical qui traite les informations d'image, associe des données actuelles de situation de patient et délivre un traitement médical assisté par l'image.

6. Procédé selon l'une quelconque des revendications 1 à 5, dans lequel une valeur seuil supplémentaire est déterminée, qui est située entre la valeur de corrélation du signal et la valeur seuil, et dans lequel des valeurs de signaux d'image qui se situent entre la valeur seuil et la valeur seuil supplémentaire, sont classifiées comme aberrantes et en sont pas prises en considération lors du réglage dynamique de la valeur seuil.

7. Programme qui, lorsqu'il est exécuté sur un ordinateur ou chargé dans un ordinateur, permet à l'ordinateur de mettre en oeuvre un procédé selon l'une quelconque des revendications 1 à 6.

8. Support de mémoire de programme informatique qui comporte un programme selon la revendication 7.
